# EUROPEAN PATENT APPLICATION

(11) **EP 1 363 257 A2**
(43) Date of publication of application: **19.11.2003**
(21) Application number: 03009843.8
(22) Date of filing: 13.05.2003
(51) Int. Cl.: G08B 21/02

(54) **A moving subject detecting apparatus and the method**

(30) Priority: 17.05.2002 JP 2002142643
(71) Applicant: MATSUSHITA ELECTRIC INDUSTRIAL CO., LTD., Kadoma-shi, Osaka 571-8501 (JP)
(72) Inventor: Matsui, Masaru, Souraku-gun, Kyoto 619-0232 (JP); Nagamitsu, Sachio, Fushimi-ku, Kyoto-shi, Kyoto 612-0846 (JP)
(74) Representative: Pautex Schneider, Nicole

(57) **Abstract**

Response pattern extracting unit 220 extracts absence detection response patterns including moving subject responses to be judged and presence detection response patterns that have symmetrical time component structures to these absence detection response patterns based on moving subject responses of moving subject detecting sensor 110 (at least one moving subject detecting sensor 110 is placed in respective rooms). Leaving room response pattern determining unit 230 adds flags showing leaving room response pattern to the above-mentioned absence detection response pattern when a response pattern extracted in response pattern extracting unit 220 includes a pair of time components that are in time reversal correlation with each other and practically equal to each other. Leaving room judging unit 240 refers to leaving room response pattern determining unit 830, the unit checks whether a flag showing a leaving room response pattern is added to the absence detection response pattern to be judged, and judges that someone left the room when receiving an absence detection response pattern to be judged from response pattern extracting unit 220.

## Description

### BACKGROUND OF THE INVENTION

### (1) Field of the Invention

The present invention relates to a moving subject detecting apparatus for detecting presence or absence of a moving subject in two or more prescribed areas and the method.

### (2) Description of the Related Art

As for a prior art for detecting presence or absence of a moving subject (such as person) in a prescribed room, there is a device for detecting a moving subject by having a tremor detection type moving subject detecting sensor on a ceiling detect someone entering the room. This apparatus can be made at low cost thanks to the inexpensive tremor detection type moving subject detecting sensor, but this apparatus makes a wrong judgment of "absence" when a person keeps still for reading or sleeping because the sensor is not active. In other words, the apparatus in this prior art has a problem that the apparatus cannot differentiate the case where a person keeps still from the case where there is no one.

As a method for solving the above-mentioned problem, "presence detection system" (conventional example 1) described in the Japanese Laid-Open Patent application No. 6-230144 is an example. This conventional example 1 makes it possible to make right judgments on presence or absence of a moving subject by using two sensors.

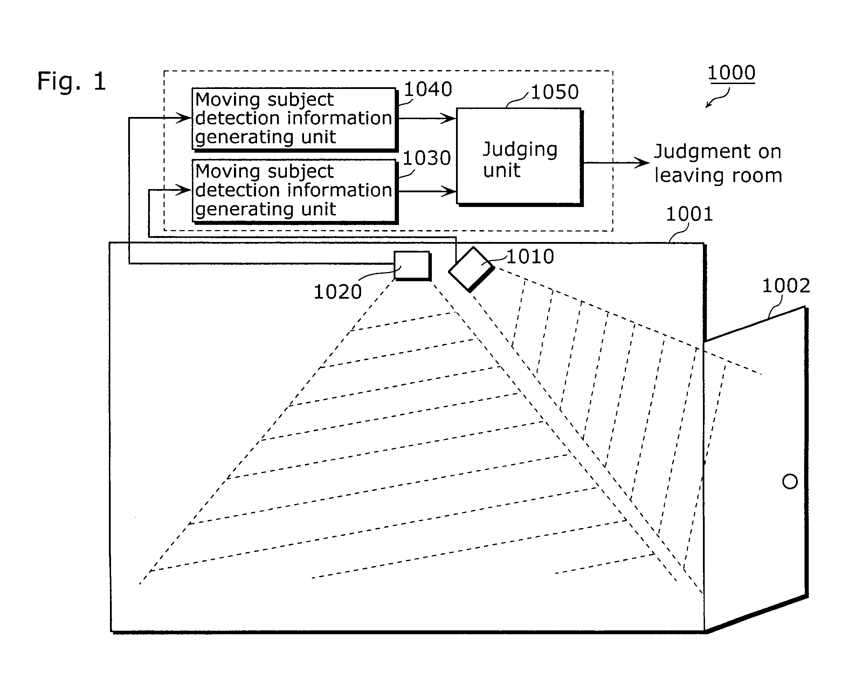

Fig. 1 is a block diagram showing the functional structure of the moving subject detecting apparatus in the conventional example 1. Moving subject detecting sensor 1010 is a sensor for detecting presence or absence of a moving subject and its detection target is around a room entrance. Also, moving subject detecting sensor 1020 is a sensor for detecting presence or absence of a moving subject and its detection target is inside a room. These sensors are placed so that the detection ranges should not overlap one another. Moving subject detection information generating unit 1030 outputs moving subject detection information (such as information showing "there is a response from a moving subject" or "there is no response from a moving subject") when moving subject detecting sensor 1010 detects a movement of a moving subject. Moving subject detection information generating unit 1040 outputs moving subject detection information like the information outputted by moving subject detection information generating unit 1030 when moving subject detecting sensor 1020 detects a movement of a moving subject. Also, judging unit 1050 makes a judgment on a person's "leaving room" or "not leaving room" based on the moving subject detection information received by moving subject detection information generating units 1030 and 1040.

Operations of the moving subject detecting apparatus in the conventional example 1 will be explained below. Moving subject detection information generating unit 1030 regularly (for example every 0.1 second) generates information showing the contents of the response according to the response from moving subject detecting sensor 1010 and outputs the information to judging unit 1050. For example, moving subject detection information generating unit 1030 generates "1" when moving subject sensor 1010 responses or "0" when the sensor does not response and outputs "1" or "0" to judging unit 50. Likewise, moving subject detection information generating unit 1040 generates "1" or "0" according to the response from moving subject sensor 1020 and outputs "1" or "0" to judging unit 50. Judging unit 1050 supervises the contents outputted by moving subject detection information generating unit 1030 and moving subject detection information generating unit 1040, and regularly (for example every 0.1 second) judges whether a moving subject left a room or not according to the rule written in Table 1.

### [Table 1]

As mentioned above, in the conventional example 1, the moving subject detecting apparatus with two tremor detection type moving subject detecting sensors is placed on the ceiling of a room. The fields of view of those sensors are the room entrance and the inside of the room respectively. Checking "entering and leaving room" with time history of the responses of the two sensors makes it possible to detect "leaving room" clearly, and thus the precision of moving subject detection can be increased.

Also, as an art similar to the conventional example 1, there is a similar method (conventional example 2) for increasing the precision in which tremor detection type moving subject sensors are placed on the ceilings of the respective rooms and corridors or halls adjacent to these rooms.

However, when trying to use moving subject detecting apparatuses in the conventional examples 1 and 2 mentioned above at home, the apparatuses must be placed respectively for a plurality of rooms, and the high cost for placing these apparatuses is a problem. For example, in the case of a home with a corridor and four rooms around the corridor in the first floor, the number of necessary moving subject sensors is "2 for each room × 4 rooms = 8" in the conventional example 1, and "at least 1 for each room × 4 rooms + 1 in the corridor = 5" in the conventional example 2.

In other words, in the conventional moving subject detection system requires a number of moving subject detecting sensors, which results in a problem of "high cost". Also, as the moving subject detecting apparatus in the conventional example 1 is big in the outer dimensions and very conspicuous, this apparatus is designed to be placed around the center of a room ceiling, and which results in a problem of making a person reluctant to placing the apparatuses.

Therefore, this apparatus is invented considering these problems and the aim of the present invention is providing a moving subject detecting apparatus that can precisely make judgments on moving subject detection even with few sensors.

### SUMMARY OF THE INVENTION

In order to achieve the above-mentioned purpose, the moving subject detecting apparatus in the present invention is a moving subject detecting apparatus for detecting a transfer of a moving subject in space composed of a plurality of areas comprises at least one of the plurality of the moving subject detecting sensors for detecting a movement of a moving subject, being placed in respective one of the plurality of the areas, a moving subject detection information generating unit operable to generate moving subject detection information that shows the detection state in which the moving subject is detected or the no detection state in which the moving subject is not detected in the respective areas based on presence or absence of the moving subject detecting sensor response, a response pattern extracting unit operable to specify a first response pattern in which, after a first area changes from a detection state to a no detection state, a second area changes from a no detection state to a detection state and a second response pattern in which, after a second area changes from a detection state to a no detection state, a first area changes from a no detection state to a detection state based on the generated moving subject detection information and a judging unit operable to judge that the moving subject moved from the first area to the second area according to the first response pattern when the first response pattern and the second response pattern specified are in a time reversal correlation with each other.

In this way, the moving subject detecting apparatus extracts an absence detection response pattern and a corresponding presence detection response pattern from a response history of each moving subject detecting sensor, and makes a judgment of leaving room using the feature of a person's behavioral pattern, that is, both components being in a time reversal correlation with each other, and thus it is possible to provide a moving subject detecting apparatus with greater precision of moving subject detection even with few sensors.

In order to achieve the above-mentioned purpose, the moving subject detecting apparatus in the present invention further comprises a first response pattern classifying unit operable to specify a representative first response pattern by storing the first response patterns specified by the response pattern extracting unit and classifying a plurality of the stored first response patterns, a second response pattern classifying unit operable to specify a representative second response pattern by storing the second response patterns specified by the response pattern extracting unit and classifying a plurality of the stored second response patterns, and the judging unit judges that the moving subject moved from the first area to the second area according to the representative first response pattern when the representative first response pattern specified by the first response pattern classifying unit and the representative second response pattern specified by the second response pattern classifying unit are in a time reversal correlation with each other.

In this way, the moving subject detecting apparatus extracts and classifies absence detection response patterns and the corresponding presence detection response patterns from response history of each moving subject detecting sensor and makes a judgment of leaving room using representative response patterns calculated based on the classified data of both sides, the apparatus can make a judgment on whether a certain person left a room or not by specifying his or her behavioral pattern, and thus it is possible to provide a moving subject detecting apparatus with greater precision of moving subject detection even with few sensors.

In order to achieve the above-mentioned purpose, this present invention can be implemented as a moving subject detection method in which the characteristic units of the moving subject detecting apparatus are regarded as steps or a program including all of these steps. In addition, the program can be stored in a ROM and the like in the moving subject detecting apparatus and distributed as a storage medium like a CD-ROM or via a transmission medium such as a communication net work.

### FURTHER INFORMATION ABOUT TECHNICAL BACKGROUND TO THIS APPLICATION

The following application is incorporated herein by reference.

Japanese Patent Application No. 2002-142643 filed May 17, 2002.

### BRIEF DESCRIPTION OF THE DRAWINGS

These and other subjects, advantages and features of the invention will become apparent from the following description thereof taken in conjunction with the accompanying drawings that illustrate a specific embodiment of the invention. In the Drawings:
Fig. 1 is a block diagram showing the functional structure of the conventional moving subject detecting apparatus.
Fig. 2 is a block diagram showing the functional structure of the moving subject detecting apparatus in a first embodiment.
Fig. 3 is a diagram showing an example of three time components in an absence detection response pattern.
Fig. 4 is a diagram showing an example of three time components in a presence detection response pattern.
Fig. 5 is an example of an absence detection response pattern stored in a form of a memory table in leaving room response pattern determining unit.
Fig. 6A is an example of respective time components in an absence detection response pattern stored in the leaving room response pattern determining unit. Fig. 6B is also an example of respective time components in an absence detection response pattern stored in the leaving room response pattern determining unit.
Fig. 7 is a diagram in which a set of time components of an absence detection response pattern in Fig. 6A and a set of time components of an absence detection response pattern in Fig. 6B are visualized.
Fig. 8 is a flow chart showing the overall processing flow of the moving subject detecting apparatus in the first embodiment.
Fig. 9 is a block diagram showing the functional structure of a moving subject detection apparatus in a second embodiment.
Fig. 10 is an example of a flow chart when classifying absence detection response patterns based on the Cluster Analysis.
Fig. 11 is a conceptual rendering of SOM when performing clustering based on Self-organization Algorithm.
Fig. 12 is an example of a flow chart when classifying absence detection response patterns based on Self-organization Algorithm.
Fig. 13 is an example of the classification result when absence detection response patterns are classified based on Self-organization Algorithm.

### DESCRIPTION OF THE PREFERRED EMBODIMENT(S)

Embodiments concerning the present invention will be explained in detail below with reference to figures.

### (First Embodiment)

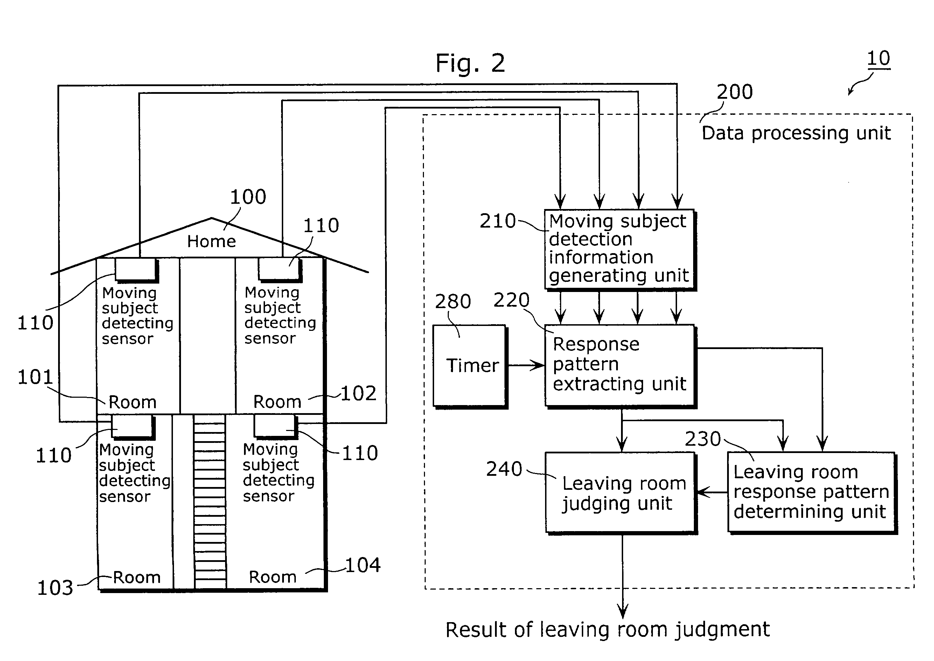

Fig. 2 is a block diagram showing the functional structure of moving subject detecting apparatus 10 in this first embodiment. Moving subject detecting apparatus 10 is composed of moving subject detecting sensor 110 which is placed in respective rooms (101 ∼ 104) in home 100 and data processing unit 200 which is connected to these moving subject detecting sensors.

At least one moving subject detecting sensor 110 such as a pyroelectric type tremor detecting sensor is placed in each room (a switch for detecting a seated person can be used in a toilet). This moving subject detecting sensor 110 outputs "1" for indicating that a movement of a moving subject (such as a person) was detected or "0" for indicating that no movement of a moving subject was detected regularly (for example, every 0.1 second). This embodiment is the case where a person moves from a room to another room, and explanation will be made on assumption that a moving subject detecting sensor 110 is placed in each room.

Data processing unit 200 is equipped with moving subject detection information generating unit 210, response pattern extracting unit 220, leaving room response pattern determining unit 230, leaving room judging unit 240 and timer 280.

Moving subject detection information generating unit 210 receives data of "1" or "0" outputted by moving subject detecting sensor 110 in all rooms regularly (for example, every 0.1 second). Moving subject detection information generating unit 210 also generates moving subject detection information made of two values of "presence" and "absence" for respective rooms based on the above-mentioned obtained data, adds room IDs (for example, "101" ∼ "104") and outputs the information to response pattern extracting unit 220.

The interval for receiving data outputted by moving subject detecting sensor 110 can be anything except "0.1 second", but not more than 1 second is desirable. Also, the moving subject detection information in this case can be any data on condition that the data can be used for differentiating "presence" from "absence". Also, as mentioned above, moving subject detection information can be managed based on the information showing the ordinal position in the storage area for moving subject detection information instead of adding room IDs.

Response pattern extracting unit 220 obtains and monitors moving subject detection information to which room IDs are added outputted by moving subject detection information generating unit 210. When detecting that moving subject detection information in a room (for example, the room whose room ID is "m") changed from "presence" to "absence" (which means that "presence" period finished because someone left the room), after that, the unit monitors whether moving subject detection information of another room (for example, the room whose room ID is "n") changes from "absence" to "presence" or not. When the above-mentioned change is found in another room, response pattern extracting unit 220 presumes that someone moved from a room to another room, extracts this response pattern made of a set of data, that is, the starting time of a "presence" state and the period of a "presence" state in a room, the period until a "presence" state is found in another room (the period regarded as moving time) and the period of a "presence" state in another room (these response patterns are called "absence detection response pattern" or "the first response pattern" from here), adds room IDs of "a room" and "another room" mentioned above, and outputs to leaving room response pattern determining unit 230 and leaving room judging unit 240. In this case, for another room (the room whose room ID is "n"), "absence detection response pattern" mentioned above is also a pattern presumed that someone moved from a room (the room whose room ID is "m") to room "n" (which is called "presence detection response pattern", that is, "the second response pattern" from here). Response pattern extracting unit 220 monitors and extracts a presence detection response pattern like the case of an absence detection response pattern, adds room IDs, and outputs to leaving room response pattern determining unit 230. Response pattern extracting unit 220 uses time information supplied by timer 280 when extracting the absence detection response pattern and the presence detection response pattern mentioned above, and time resolution of respective time components of both patterns is desired to be not more than 1 second (for example, 0.1 second).

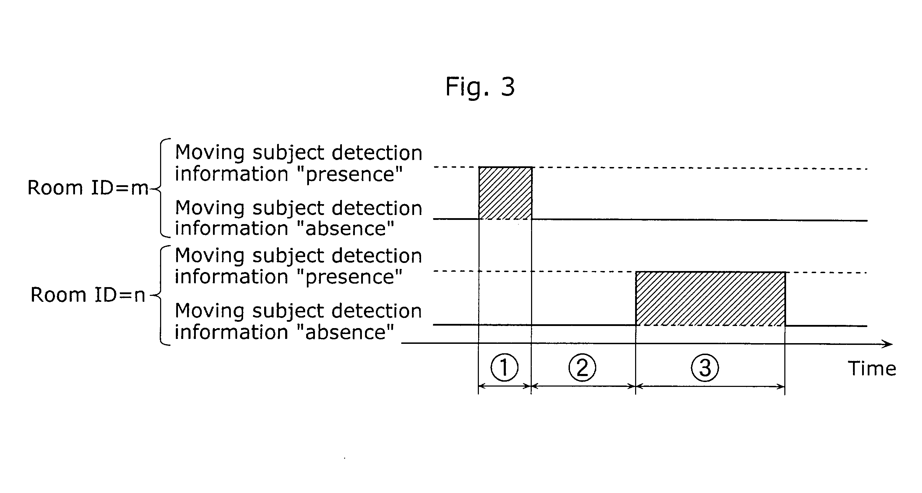

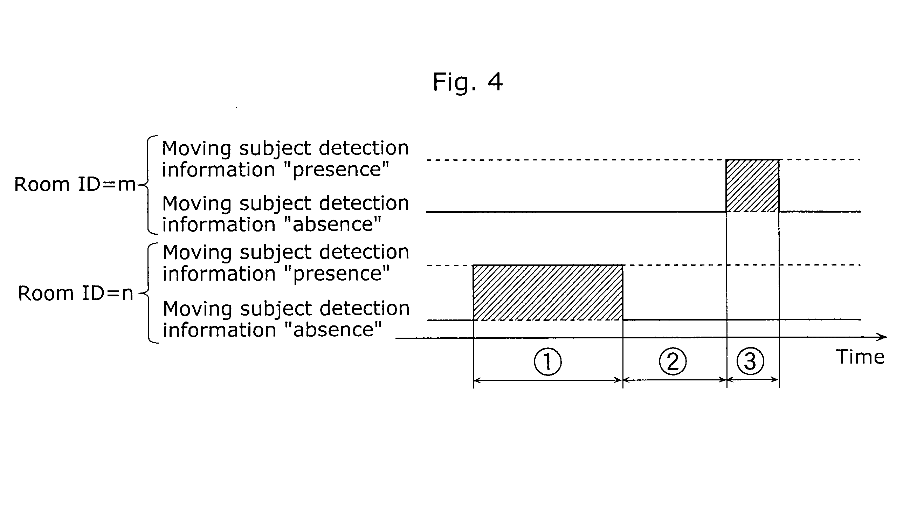

Here, "absence detection response pattern" and "presence detection response pattern" mentioned above will be explained in detail with reference to Fig. 3 and Fig 4.

Fig. 3 is a diagram showing an example of the three time components in an absence detection response pattern. As shown in Fig. 3, an absence detection response pattern is a pattern when someone presumably moved from the room whose ID is "m" to the room whose ID is "n" (that is, a pattern when information on the room whose ID is "m" changes from "presence" to "absence"). An absence detection response pattern is composed of three time components: time component 1 (called "absence component 1" from here) which is the duration time of "presence" state in moving subject detection information on the room whose ID is "m" until the information changes from "presence" to "absence" after the information changed from "absence" to "presence", time component 2 (called "absence component 2" from here) which corresponds to the moving time when someone moves from the room whose ID is "m" to the room whose ID is "n", and time component 3 (called "absence component 3" from here) which is the duration time of "presence" state in moving subject detection information on the room whose ID is "n" until the information changes from "presence" to "absence" after the information changed from "absence" to "presence"

Fig. 4 is a diagram showing an example of the three time components in a presence detection response pattern. As shown in Fig. 4, a presence detection response pattern is a pattern when someone presumably moved from the room whose ID is "n" to the room whose ID is "m" (that is, a pattern when information on the room whose ID is "m" changes from "absence" to "presence"). A presence detection response pattern is composed of three time components: time component 1 (called "presence component 1" from here) which is the duration time of "presence" state in moving subject detection information on the room whose ID is "n" until the information changes from "presence" to "absence" after the information changed from "absence" to "presence", time component 2 (called "presence component 2" from here) which corresponds to the moving time when someone moves from the room whose ID is "n" to the room whose ID is "m", and time component 3 (called "presence component 3" from here) which is the duration time of "presence" state in moving subject detection information on the room whose ID is "m" until the information changes from "presence" to "absence" after the information changed from "absence" to "presence"

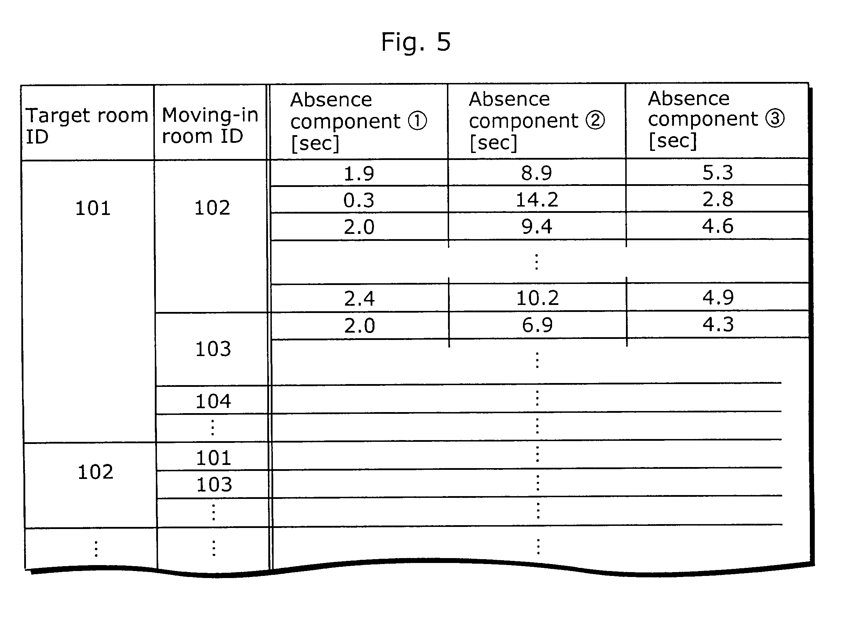

Leaving room response pattern determining unit 230 obtains an absence detection response pattern and a presence detection response pattern outputted by response pattern extracting unit 220 and stores respective time components associated with respective room IDs (refer to Fig. 5 explained later on). Further, leaving room response pattern determining unit 230 judges whether someone really left the room concerning "absence component 1" in the absence detection response pattern focused on using other presence detection response pattern stored in leaving room response pattern determining unit 230. More specifically, leaving room response pattern determining unit 230 tries to search the presence detection response pattern symmetrical with the absence detection response pattern focused on, and adds a flag (or a label) showing "leaving room response pattern" to the absence detection response pattern when the presence response pattern is found.

Here, "searching a presence detection response pattern with a certain symmetry" mentioned above will be explained in detail with reference to Fig. 3 and Fig. 4.

Leaving room response pattern determining unit 230 compares absence component 2 with presence component 2 first that are "the periods regarded as moving time" as mentioned above in the absence detection response pattern focused on and the presence detection response pattern referred to, and transposes the positions of "presence component 1" and "presence component 3" of the presence detection response pattern referred to when the periods are judged to be practically equal. Further, leaving room response pattern determining unit 230 judges whether the presence detection response pattern after transposing mentioned above and the absence detection response pattern to be focused on are practically equal or not, and when those response patterns are judged to be practically equal, adds a flag showing "leaving room response pattern" to the absence detection response pattern focused on. "Practically equal" used here means, for example, each difference between two correlating time components of the three time components mentioned above are within ± 0.5 second. The above-mentioned continuous processing is performed in real time.

When leaving room judging unit 240 receives "absence detection response pattern" from response pattern extracting unit 220, the unit searches same absence detection response pattern in leaving room response pattern determining unit 230 and judges whether the above-mentioned flag (or label) is added to this pattern. When the above-mentioned flag (or label) is added, leaving room judging unit 240 judges "someone left the room concerning absence component 1 in the above-mentioned absence detection response pattern."

Timer 280 provides response pattern extracting unit 220 with time information at a certain interval (for example, an interval of 0.1 second) (in this case, absolute time or relative time after data processing unit 200 started can be used).

Fig. 5 is an example of an absence detection response pattern to be stored in leaving room response pattern determining unit 230. As shown in Fig. 5, leaving room response pattern determining unit 230 stores respective time components of absence detection response patterns (absence component 1, absence component 2 and absence component 3) in extraction order for the target room ID ("101" in the example of Fig. 5) showing the target room of a leaving room judgment and the moving-in room ID ("102" in the example of Fig. 5) showing the presumable moving-in room respectively. Likewise, leaving room response pattern determining unit 230 stores respective time components mentioned above as to all the combinations of a target room ID and a moving-in room ID.

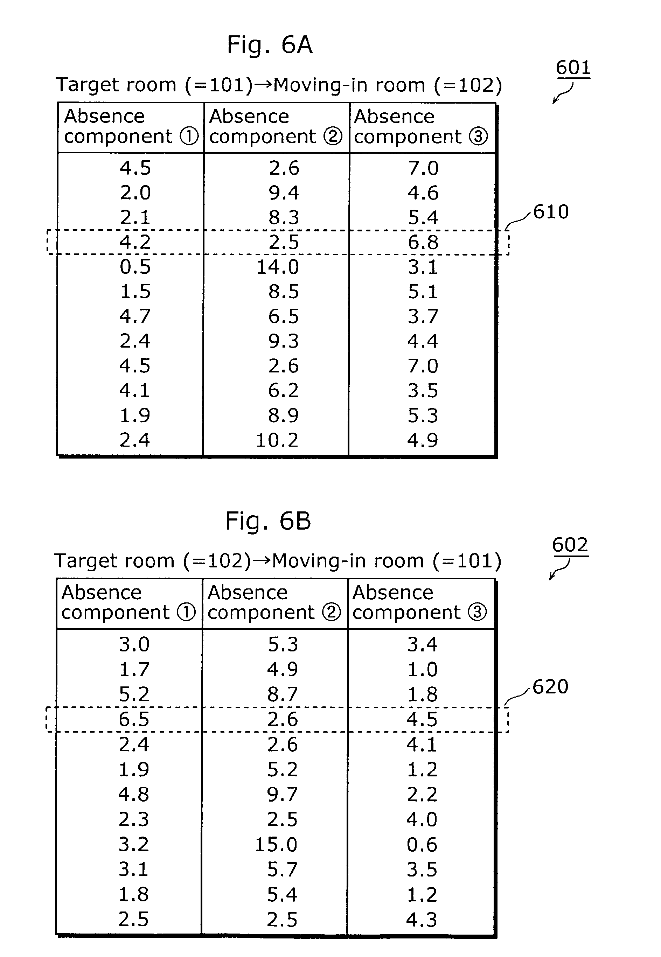

Fig. 6A and 6B are practical examples of respective sets of time components in absence detection response patterns to be stored in absence detection response pattern determining unit 230. When focusing on absence detection response pattern 610 in Fig. 6A and absence detection response pattern 620 in Fig. 6B, the difference between "absence component 2" in absence detection response pattern 610 and "absence component 2" in absence detection response pattern 620 is only 0.1 [sec]. Further, the difference between "absence component 1" in absence detection response pattern 610 and "absence component 3" in absence detection response pattern 620 (0.3 [sec]) and the difference between "absence component 3" in absence detection response pattern 610 and "absence component 1" in absence detection response pattern 620 (0.3 [sec]) are both within 0.5 [sec], which can be said absence detection response pattern 610 is "symmetrical" with absence detection response pattern 620. Note that absence detection response pattern 620 mentioned above is also "presence detection response pattern" for room 101.

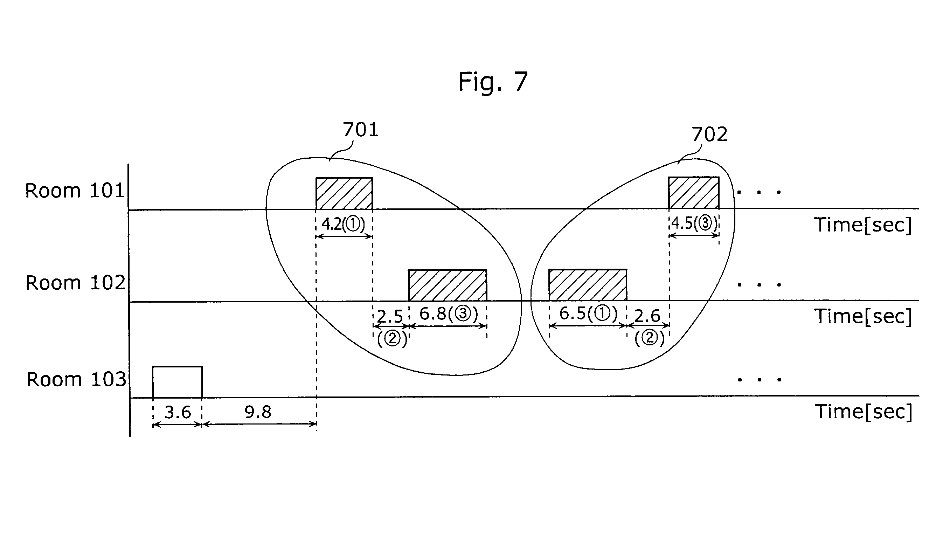

Fig. 7 is a diagram showing absence detection response pattern 701 where absence detection response pattern 610 in the above Fig. 6A is visualized and presence detection response pattern 702 where absence detection response pattern 620 in the above Fig. 6B is visualized. As shown in Fig. 7, absence detection response pattern 701 is symmetrical with presence detection response pattern 702 (in other words, presence component 1 and presence component 3 in presence detection response pattern 702 are practically equal when transposed to each other). Presence detection response pattern 702 is shown after absence detection response pattern 701 in Fig. 7, a presence detection response pattern extracted before absence detection response pattern 701 is referred to when a judgment on whether "someone left the room" is made as to absence detection response pattern 701.

Next, operations of moving subject detection apparatus 10 that has the above-mentioned units will be explained. The following explanation will be made on assumption that the target room of leaving room judgment is the room whose room ID is "m" and someone presumably moved from the room "m" to the room whose room ID is "n".

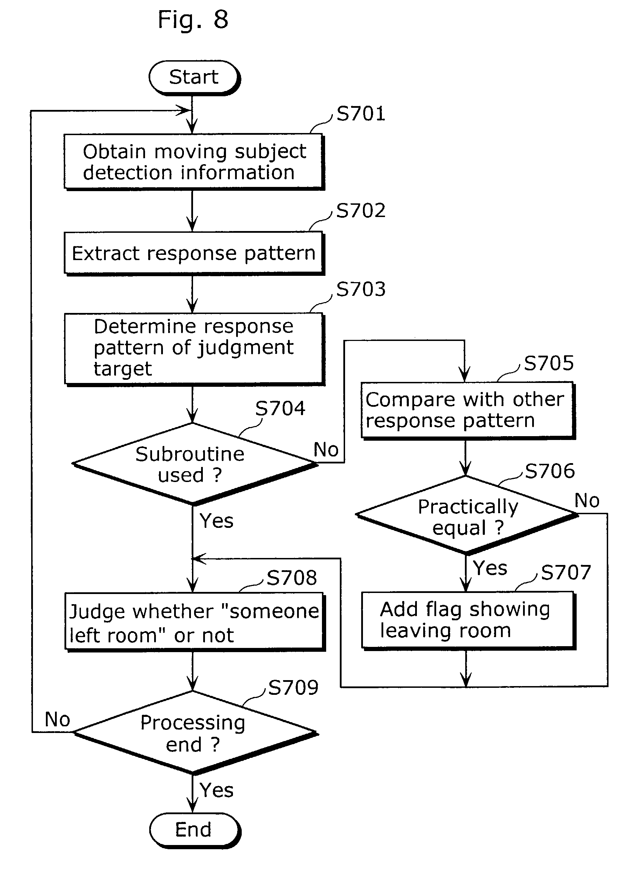

Fig. 8 is a flow chart showing the processing flow in moving subject detection apparatus 10 in this first embodiment.

When response pattern extracting unit 220 acquires moving subject detection information outputted by moving subject detection information generating unit 210 (S701) first, response pattern extracting unit 220 extracts an absence detection response pattern in which moving subject detection information in room "m" changes from "presence" to "absence" and moving subject detection information in room "n" changes from "absence" to "presence" (S702), and outputs the absence response pattern to leaving room response pattern determining unit 230 and leaving room judging unit 240. In this way, an absence detection response pattern to be judged is specified (S703).

After that, in the subroutine processing (S704: No), when leaving room response pattern determining unit 230 receives an absence detection response pattern from response pattern extracting unit 220, the unit compares the absence detection response pattern with a presence detection response pattern already stored (S705). When those patterns are practically equal (S706: Yes), a flag showing "leaving room response pattern" is added (S707).

When leaving room judging unit 240 receives an absence detection response pattern to be judged from response pattern extracting unit 220, the unit searches same absence detection response pattern for leaving room response pattern determining unit 230, checks whether a flag showing "leaving room response pattern" is added to this absence detection response pattern (S704), and judges that someone left the room concerning the absence detection response pattern to be judged (S708).

As mentioned above, moving subject detection apparatus 10 in this first embodiment extracts an absence detection response pattern and a corresponding presence detection response pattern from a response history of respective moving subject detecting sensors (at least one sensor is placed in respective rooms), and makes a judgment of leaving room using the feature of a person's behavioral pattern, that is, both components being in a time reversal correlation with each other (which is the feature that each person demonstrates a similar behavioral pattern in moving time from a room to another room or the time until a person stop moving in a move-in room), and thus it is possible to provide a moving subject detecting apparatus with greater precision of moving subject detection even with few sensors.

### (Second Embodiment)

In the above first embodiment, explanation for an embodiment in which "leaving room judgment" on respective absence detection response patterns is made using absence detection response patterns and presence detection response patterns gotten in real time is made. In this second embodiment, explanation for an embodiment in which previously collected response patterns are classified into either absence detection response patterns or presence detection response patterns respectively, representative patterns are calculated from respective classified patterns, "leaving room judgment" on respective absence detection response patterns is made based on these representative patterns.

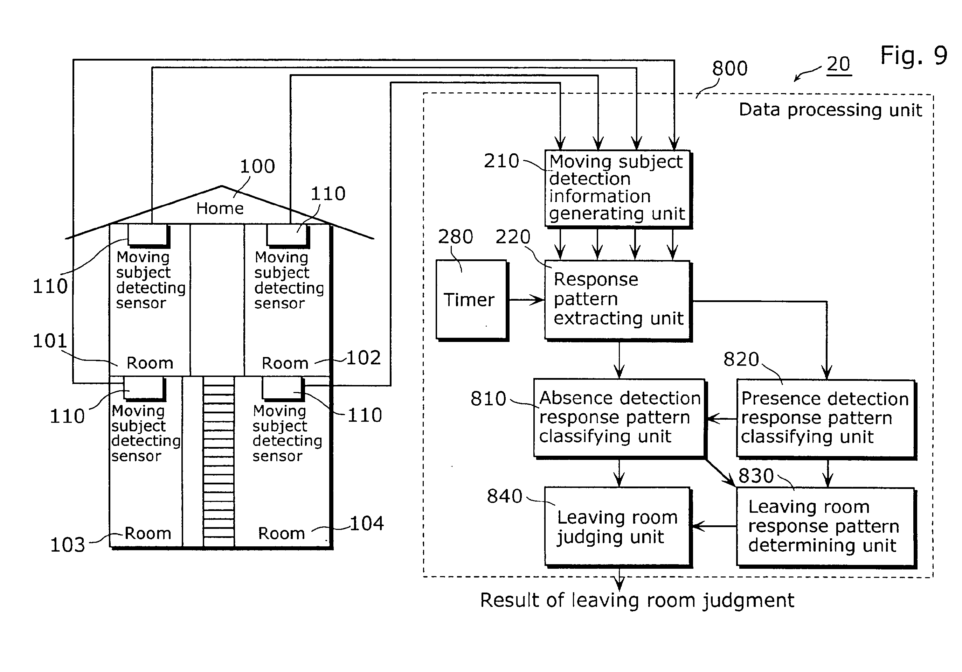

Fig. 9 is a block diagram showing the functional structure of moving subject detecting apparatus 20 in the second embodiment. As shown in Fig. 9, moving subject detecting apparatus 20 is further equipped with absence detection response pattern classifying unit 810 and presence detection response pattern classifying unit 820. Note that the functions of leaving room response pattern determining unit 830 and leaving room judging unit 840 are partly different from those functions of leaving room response pattern determining unit 230 and leaving room judging unit 240 of moving subject detecting apparatus 10 in the first embodiment mentioned above.

Absence detection response pattern classifying unit 810 classifies a plurality of absence detection response patterns outputted by response pattern extracting unit 220 into some groups with similar time component structures, determines representative absence detection response patterns based on the classification result, and outputs these representative absence detection response patterns to leaving room response pattern determining unit 830. In addition, when absence detection response pattern classifying unit 810 receives an absence detection response pattern to be judged from response pattern extracting unit 220, the unit outputs, to leaving room judging unit 840, the absence detection response pattern along with class attribution information of the class to which the absence detection response pattern belong.

Presence detection response pattern classifying unit 820 classifies a plurality of presence detection response patterns outputted by response pattern extracting unit 220 into some groups with a similar time component structure, determines representative presence detection response patterns based on the classification result, and outputs these representative presence detection response patterns to leaving room response pattern determining unit 830. Note that the same classification method can be used in absence detection response pattern classifying unit 810 and presence detection response pattern classifying unit 820.

Leaving room response pattern determining unit 830 is equipped with functions of leaving room response pattern determining unit 230 in the above-mentioned first embodiment and an additional function of making "leaving room judgments" on absence detection response patterns to be judged based on the classified absence detection response patterns and absence detection response patterns that represent respective classes outputted by absence detection response pattern classifying unit 810 and presence detection response patterns that represent respective classes outputted by presence detection response pattern classifying unit 820. More specifically, for example, assume that absence detection response patterns are classified into four classes of group A ∼ group D and presence detection response patterns are classified into four classes of group E ∼ group H. When absence detection response pattern "a" that represents group A to which an absence detection response pattern to be judged belong are compared with presence detection response pattern "e" that represents group E, and when these representative patterns are practically equal, the absence detection response pattern that belongs to group A is judged as "leaving room", and a flag (or a label) showing "leaving room" is added to group A. Whether those representative patterns are practically equal or not in this case is judged based on the same method as the above-mentioned first embodiment (that is, "presence component 1" and "presence component 3" in the presence detection response pattern "e" are transposed to each other and then transposed presence detection response pattern "e" is compared with the absence detection response pattern "a").

When leaving room judging unit 840 receives class attribution information showing the classified groups to which an absence detection response pattern to be judged and this absence detection response pattern belong via absence detection response pattern classifying unit 810 in addition to the function of leaving room judging unit 240 in the above-mentioned first embodiment, the unit refers to leaving room response pattern determining unit 830, judges whether "the flag (or a label)" mentioned above is added to the classified group that is shown by the class attribution information, and, when the flag (or a label) is added, makes a judgment of "leaving room" as to the absence detection response pattern to be judged.

Explanation for the other units in moving subject detection apparatus 20 will be omitted because they are the same as moving subject detection apparatus 10 in the above first embodiment.

Next, operations of moving subject detecting apparatus 20 composed of the units mentioned above will be explained.

First, response pattern extracting unit 220 previously extracts a presence detection response pattern and an absence detection response pattern, adds an ID of a target room in which leaving room judgment is made and a move-in room ID, and outputs these two kinds of response patterns to absence detection response pattern classifying unit 810 and presence detection response pattern classifying unit 820.

Absence detection response pattern classifying unit 810 classifies absence detection response patterns which are previously collected via response pattern extracting unit 220. As a classification method in this case, a method in which a known classification method such as the Cluster Analysis which is a kind of the multivariate analysis (for example, refer to *"Practical Multivariate Analysis (2nd edition)"* written by Tamio Kan, Gendai Sugakusha , 2001 (bibliography 1)) or Self-organization Algorithm in which a neural network is used (refer to *"Self-organization Algorithm and Association Memory"* written by T. Kohonen, Springer-Verlag Tokyo ,1993 (bibliography 2)) can be used.

When applying one of classification methods mentioned above, absence detection response pattern classifying unit 810 calculates representative absence detection response patterns respective for the classified groups. "Representative absence detection response pattern" used here is, for example, the average of all the absence detection response patterns belong to respective classes when the cluster analysis is used or a representative vector value of each node when Kohonen's Self-organization Algorithm is used. It is desirable to perform the above-mentioned classification for respective room IDs of an ID of a target room in which a leaving room judgment is made and an ID of a moving-in room after a prescribed number of two response patterns are stored.

Next, Absence detection response pattern classifying unit 810 outputs the classification result such as room IDs, class attribution information and representative absence detection response patterns in the respective classified groups to leaving room response pattern determining unit 830.

On the other hand, presence detection response pattern classifying unit classifies presence detection response patterns like the above-mentioned absence detection response pattern classifying unit 810 did, calculates representative presence detection response patterns in the respective classified groups, and outputs the result to leaving room response pattern determining unit 830.

In this way, when leaving room response pattern determining unit 830 receives an absence detection response pattern to be judged and the class attribution information from response pattern extracting unit 220 via absence detection response pattern classifying unit 810, the unit compares the group to which an absence detection response pattern belongs with the group to which another presence detection response pattern belongs.

When time components of presumable moving time from a room to another room (that is, absence component 1 and presence component 2) are compared with each other first and judged to be practically equal, comparison in this case is made after transposing the positions of "presence component 1" and "presence component 3" (refer to Fig. 4 mentioned above), both of which are the classified representative presence detection response patterns as shown in the first embodiment mentioned above. When these response patterns are judged to be practically equal, leaving room response pattern determining unit 830 adds a flag showing "leaving room response pattern" as to the group to which an absence detection response pattern to be judged belong.

When leaving room judging unit 840 receives an absence detection response pattern to be judged and the class attribution information from response pattern extracting unit 220 via absence detection response pattern classifying unit 810, judges whether the flag showing "leaving room response pattern" is added to the classified group to which the absence detection response pattern belongs, and, when the flag is added, makes a judgment of "leaving room" as to the absence detection response pattern to be judged.

Next, each of classification method will be explained.

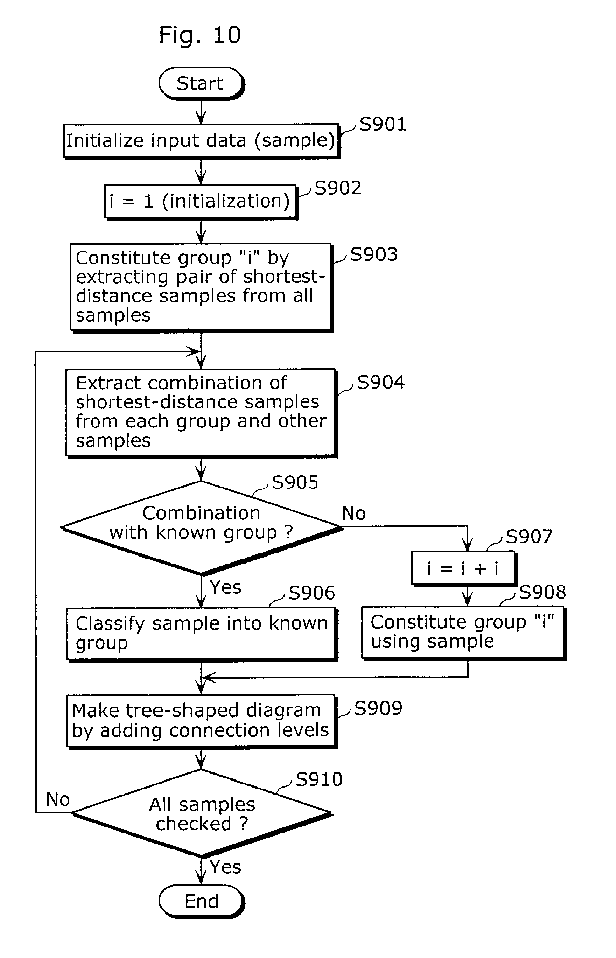

Fig. 10 is an example of a flow chart when absence detection response patterns are classified based on the Cluster Analysis.

First, when input data (samples) are inputted (S901), absence detection response pattern classifying unit 810 initializes variation number "i" to 1 (S902). Next, absence detection response pattern classifying unit 810 extracts a combination of the shortest distance samples from samples, and the combination constitutes group "i" (S903).

Also, absence detection response pattern classifying unit 810 extracts combinations of the shortest distance samples from respective groups and other samples (S904) and judges whether the respective combinations include any of previously made groups (S905). When a combination is a combination with a previously made group (S905: Yes), the sample is classified into the previously made group (S906). By contrast, when a combination is not a combination with a previously made group (S905: No), variation number "i" is incremented by one (S907) to constitute group "i" of the combination (S908).

In this way, when a new sample is classified into a previously made group or when a new group is made, absence detection response pattern classifying unit 810 adds respective connection levels to make a tree-shaped diagram (S909).

Absence detection response pattern classifying unit 810 processes all the samples in this way (S904 ∼ S910).

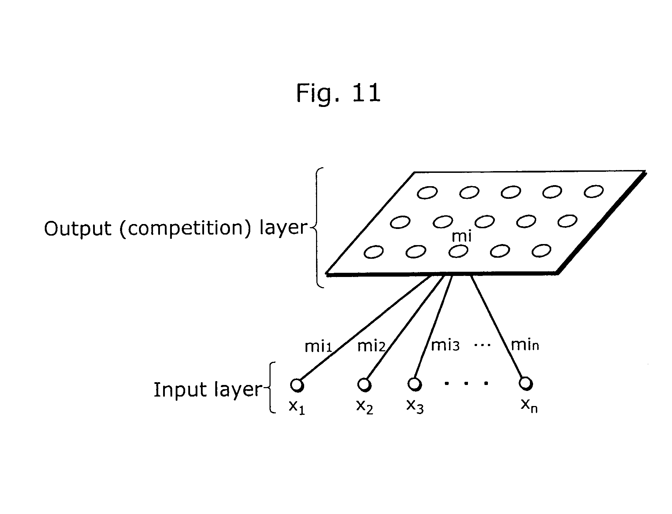

Fig. 11 is a conceptual rendering of SOM when clustering is performed based on Self-organization Algorithm. "SOM (Self Organization Map)" mentioned here is a two-layer net work that can show the features of patterns after unsupervised learning (as to the detail, refer to bibliography 2 mentioned above). Each node in the input layer is connected to each node in the output (competition) layer.

SOM in Fig. 11 is made on assumption that each of "N" entries is "P" dimensional (3 dimensional in the case of this second embodiment), and "N" entries are classified into "M" classes. (P, N and M are arbitrary integrates.)

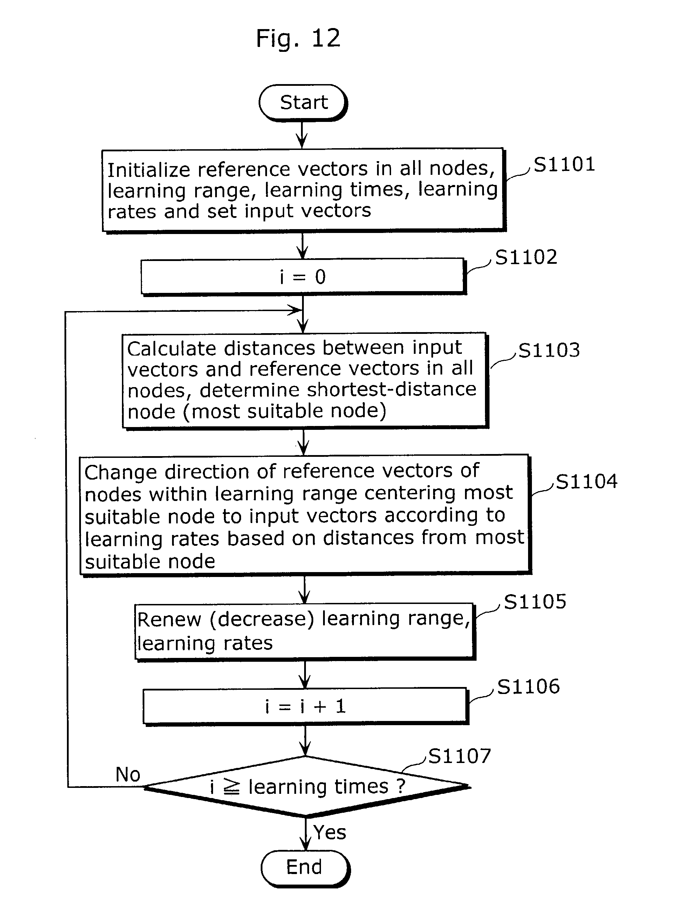

Fig. 12 is an example of a flow chart when absence detection response patterns are classified based on Self-organization Algorithm.

First, absence detection response pattern classifying unit 810 initializes reference vectors in all nodes, learning range, learning times, and learning rates and sets input vectors (that are vectors uniquely determined by a sample to be inputted)(S1101) and then initializes variation "i" (S1102). Next, absence detection response pattern classifying unit 810 calculates the distances between all the input vectors and reference vectors in all nodes, determines the node with the shortest distance (called "most suitable node" from here)(S1103), and changes direction of reference vectors in all nodes within the learning range centering the most suitable node to the direction of input vectors according to respective learning rates calculated based on the distances from the most suitable node (S1104).

Also, absence detection response pattern classifying unit 810 renews (decreases) the learning range and the learning rates (S1105) and increments variation "i" (S1106).

If variation "i" is less than the learning times mentioned above (S1107: No), the above-mentioned processing (S1103 ∼ S1107) is repeated. On the other hand, if variation "i" is not less than the learning times (S1107: Yes), it is the end of the processing.

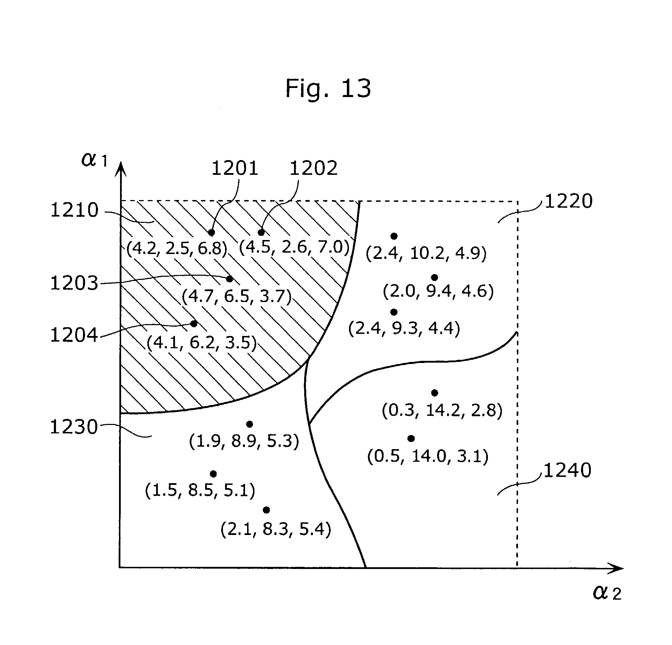

Fig. 13 is an example of the classification result when absence detection response patterns are classified based on Self-organization Algorithm. Fig. 13 shows the classification result of absence detection response patterns shown in Fig. 6A mentioned above.

The processing flow of the whole moving subject detecting apparatus 20 in this second embodiment is almost the same as the flow chart (refer to Fig. 8) in the first embodiment mentioned above, but calculating process of representative absence detection response patterns and representative presence detection response patterns at the time of response pattern extraction in Fig. 8 (S702) is added to in this second embodiment.

In this way, as moving subject detection apparatus in this second embodiment extracts and classifies absence detection response patterns and the corresponding presence detection response patterns from response history of each moving subject detecting sensor (at least one sensor is placed in respective rooms) and makes a judgment of leaving room using respective representative response patterns calculated based on the classified data of both sides, the apparatus can make a judgment on whether a certain person left a room or not by specifying his or her behavioral pattern, and thus it is possible to provide a moving subject detecting apparatus with greater precision of moving subject detection even with few sensors.

The first and the second embodiments explained above are embodiments in which that someone left a room is judged, but it is also possible to judge that someone entered a room in the same method.

## Claims

1. A moving subject detecting apparatus for detecting a transfer of a moving subject in space composed of a plurality of areas, the moving subject detecting apparatus comprising:
a plurality of moving subject detecting sensors for detecting movements of a moving subject, at least one of the plurality of the moving subject detecting sensors being placed in respective one of the plurality of the areas;
a moving subject detection information generating unit operable to generate moving subject detection information that shows a detection state in which the moving subject is detected or a no detection state in which the moving subject is not detected in the respective areas based on presence or absence of the moving subject detecting sensor response;
a response pattern extracting unit operable to specify ( i ) a first response pattern in which, after a first area changes from a detection state to a no detection state, a second area changes from a no detection state to a detection state and ( ii ) a second response pattern in which, after a second area changes from a detection state to a no detection state, a first area changes from a no detection state to a detection state based on the generated moving subject detection information; and
a judging unit operable to judge that the moving subject moved from the first area to the second area according to the first response pattern when the first response pattern and the second response pattern specified are in a time reversal correlation with each other.

2. A moving subject detecting apparatus according to Claim 1,
wherein the judging unit judges that the first response pattern and the second response pattern are in a time reversal correlation with each other when the time in the first response pattern after the first area changed from the detection state to the no detection state until the second area changes from the no detection state to the detection state is equal to the time in the second response pattern after the second area changes from the detection state to the no detection state until the first area changes from the no detection state to the detection state within a certain range.

3. A moving subject detecting apparatus according to Claim 2,
wherein the judging unit further judges that the first response pattern and the second response pattern are in a time reversal correlation with each other when the duration time of the detection state in the first area and the duration time of the detection state in the second area in the first response pattern are respectively equal to the duration time of the detection state in the first area and the duration time of the detection state in the second area in the second response pattern within a certain range.

4. A moving subject detecting apparatus according to Claim 1, the moving subject detecting apparatus further comprising:
a first response pattern classifying unit operable to specify a representative first response pattern by storing the first response patterns specified by the response pattern extracting unit and classifying a plurality of the stored first response patterns;
a second response pattern classifying unit operable to specify a representative second response pattern by storing the second response patterns specified by the response pattern extracting unit and classifying a plurality of the stored second response patterns;
wherein the judging unit judges that the moving subject moved from the first area to the second area according to the representative first response pattern when the representative first response pattern specified by the first response pattern classifying unit and the representative second response pattern specified by the second response pattern classifying unit are in a time reversal correlation with each other.

5. A moving subject detecting apparatus according to Claim 4,
wherein the first response pattern classifying unit specifies the representative first response pattern based on the Cluster Analysis, and
the second response pattern classifying unit specifies the representative second response pattern based on the Cluster Analysis.

6. A moving subject detecting apparatus according to Claim 4,
wherein the first response pattern classifying unit specifies the representative first response pattern based on Self-organization Algorithm, and
the second response pattern classifying unit specifies the representative second response pattern based on Self-organization Algorithm.

7. A moving subject detecting apparatus according to Claim 4,
wherein the judging unit judges that the representative first response pattern and the representative second response pattern are in a time reversal correlation with each other when the time in the representative first response pattern after the first area changed from the detection state to the no detection state until the second area changes from the no detection state to the detection state is equal to the time in the representative second response pattern after the second area changes from the detection state to the no detection state until the first area changes from the no detection state to the detection state within a certain range.

8. A moving subject detecting apparatus according to Claim 7,
wherein the judging unit further judges that the representative first response pattern and the representative second response pattern are in a time reversal correlation with each other when the duration time of the detection state in the first area and the duration time of the detection state in the second area in the representative first response pattern are respectively equal to the duration time of the detection state in the first area and the duration time of the detection state in the second area in the representative second response pattern within a certain range.

9. A moving subject detection method for detecting a transfer of a moving subject in space composed of a plurality of areas,
wherein at least one moving subject detecting sensor that detects movements of a moving subject is placed in the respective one of the plurality of the areas,
the moving subject detection method comprising:
a moving subject detection information generating step for generating moving subject detection information that shows a detection state in which the moving subject is detected or a no detection state in which the moving subject is not detected in the respective areas based on presence or absence of the moving subject detecting sensor response;
a response pattern extracting step for specifying a first response pattern in which, after a first area changes from a detection state to a no detection state, a second area changes from a no detection state to a detection state and a second response pattern in which, after a first area changes from a detection state to a no detection state, a first area changes from a no detection state to a detection state based on the generated moving subject detection information; and
a judging step for judging that the moving subject moved from the first area to the second area according to the first response pattern when the first response pattern and the second response pattern specified are in a time reversal correlation with each other.

10. A moving subject detection method according to Claim 9, the moving subject detecting apparatus further comprising:
a first response pattern classifying step for specifying a representative first response pattern by storing the first response patterns specified in the response pattern extracting step and classifying a plurality of the stored first response patterns;
a second response pattern classifying step for specifying a representative second response pattern by storing the second response patterns specified in the response pattern extracting step and classifying a plurality of the stored second response patterns;
wherein in the judging step, a judgment that the moving subject moved from the first area to the second area according to the representative first response pattern is made when the representative first response pattern specified in the first response pattern classifying step and the representative second response pattern specified in the second response pattern classifying step are in a time reversal correlation with each other.

11. A program for a moving subject detecting apparatus detecting a transfer of a moving subject in space composed of a plurality of areas,
wherein at least one moving subject detecting sensor for detecting movements of a moving subject is placed in the respective one of the plurality of the areas,
the program comprising:
a moving subject detection information generating step for generating moving subject detection information that shows a detection state in which the moving subject is detected or a no detection state in which the moving subject is not detected in the respective areas based on presence or absence of the moving subject detecting sensor response;
a response pattern extracting step for specifying a first response pattern in which, after a first area changes from a detection state to a no detection state, a second area changes from a no detection state to a detection state and a second response pattern in which, after a second area changes from a detection state to a no detection state, a first area changes from a no detection state to a detection state based on the generated moving subject detection information; and
a judging step for judging that the moving subject moved from the first area to the second area according to the first response pattern when the first response pattern and the second response pattern specified are in a time reversal correlation with each other.

12. A program according to Claim 11, the program further comprising:
a first response pattern classifying step for specifying a representative first response pattern by storing the first response patterns specified in the response pattern extracting step and classifying a plurality of the stored first response patterns;
a second response pattern classifying step for specifying a representative second response pattern by storing the second response patterns specified in the response pattern extracting step and classifying a plurality of the stored second response patterns;
wherein in the judging step, a judgment that the moving subject moved from the first area to the second area according to the representative first response pattern is made when the representative first response pattern specified in the first response pattern classifying step and the representative second response pattern specified in the second response pattern classifying step are in a time reversal correlation with each other.
